(19) Europäisches Patentamt
European Patent Office
Office européen des brevets

(11) Publication number: **0 209 546**
**B1**

(12) **EUROPEAN PATENT SPECIFICATION**

(45) Date of publication of patent specification: **03.10.90**

(21) Application number: **86900584.3**

(22) Date of filing: **31.12.85**

(86) International application number:
**PCT/US85/02587**

(87) International publication number:
**WO 86/04073 17.07.86 Gazette 86/17**

(51) Int. Cl.[5]: **C 08 K 7/06,** C 08 K 7/14, C 08 L 67/00, C 08 L 69/00, C 08 L 71/00, C 08 L 77/08, C 08 L 81/06

# (54) AROMATIC POLYMER COMPOSITIONS.

(30) Priority: **04.01.85 US 688794**

(43) Date of publication of application:
**28.01.87 Bulletin 87/05**

(45) Publication of the grant of the patent:
**03.10.90 Bulletin 90/40**

(84) Designated Contracting States:
**AT BE CH DE FR GB IT LI NL SE**

(56) References cited:

| | |
|---|---|
| EP-A-0 133 357 | US-A-4 168 360 |
| US-A-3 897 395 | US-A-4 293 670 |
| US-A-3 998 786 | US-A-4 351 932 |
| US-A-4 080 484 | US-A-4 365 034 |

N, Org. Coat Plast. Chem., Volumn 43 ( Dayton Ohio ) issued 1980, Sun Gun Chu; Richard P. Chartoff; Daniel E. Miller; Gerald L. Burkelt, "Dynamic Mechanical Properties of Polysulfones Modified with Acetylene Terminated Sulfone", see pages 702 to 708

N, Polym. Preph. ( Am. Chem. Soc. Div. Polym. Chem.), Volumn 22, No. 52, issued 1983 ( Hampton, Virginia ), S.J. Havens; P.M. Hergenrother, "Ethyhyl-Terminated Polyarylates", see pages 16 and 17.

(73) Proprietor: **RAYCHEM CORPORATION (a Delaware corporation)**
**300 Constitution Drive**
**Menlo Park, California 94025 (US)**

(72) Inventor: **MERCER, Frank**
**2 Ridgewood Court**
**Belmont, CA 94002 (US)**

(74) Representative: **Jay, Anthony William et al**
**Raychem Limited Intellectual Property Law Department Faraday Road**
**Dorcan Swindon Wiltshire (GB)**

(56) References cited:

N, Sampe J., Volume 20, No. 5, issued 1984 ( Hampton, Virginia ), P.M. Hergenrother; B.J. Jensen; S.J. Havens, Thermoplastic Composite Matrices with Improved Solvent Resistance, see pages 18-23.

N, J. Polym. Sci., Polym. Chem. Ed., 22 ( 11, part 1 ), issued 1984 November ( Hampton, Virginia ); S.J. Havens; P.M. Hergenrother, "Ethynyl-Terminated Polyarylates: Synthesis and Characterization", see pages 3011 to 3025.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 209 546 B1

**Description**

a) Field of the Invention

This invention relates to a curable polymeric composition, the composition after it has been cured and an article comprising at least one layer of the composition supported on a substrate. The composition comprises an aromatic polymer and a reactive component.

b) Background and Invention

Aromatic polymers have many desirable properties, such as good lap shear strength, thermal stability and tensile strength which make them useful for a wide variety of applications. The term aromatic polymer is used herein to mean a polymer which has aromatic groups incorporated in the repeat unit of their backbone chain. Such polymers include for example poly(imides), poly(etherimides), poly(sulfones), poly(ether sulfones), poly(aryl ether ketones), poly(carbonates), poly(arylates) and the like.

In EP—A— 0 133 357, lying in the Article 54(3) EPC field, compositions comprising (A) an aromatic, non-crystalline thermoplast, (B) an aliphatic polymer and (C) a cross-linking agent that may contain terminal acetylene, vinyl or maleimide units is disclosed. U.S—A—4 351 932 describes compositions comprising unsaturated bis-imides, diunsaturated cross-linking agents and optionally poly(ether sulfones).

Aromatic polymers can be used as adhesives, coatings, matrix resins for fiber reinforced composite structures and numerous other uses where a relatively thin layer of the polymer is placed on a substrate. One of the problems that has been encountered in the use of aromatic polymers is the tendency of the polymers to crack. Further, when used as adhesives and coatings the adhesion between the polymer and various substrates can be less than that required for high performance applications.

I have now discovered that solvent cracking resistance, adhesive properties, high temperature properties and tensile strength or aromatic polymers can be significantly improved by adding a reactive aromatic component to the aromatic polymer and then curing the resulting composition.

The invention accordingly provides a curable composition (a) an aromatic polymer first component which is a pyrrone, or a polyimide isoindiloquinazolinedione, or an aromatic polymer having a first preponderant repeat unit selected from

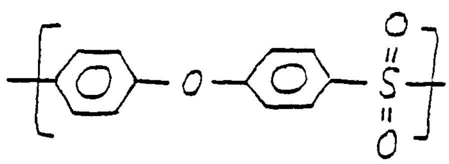 ;

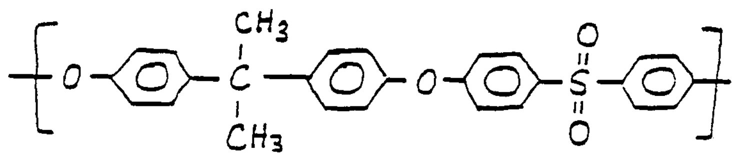 ;

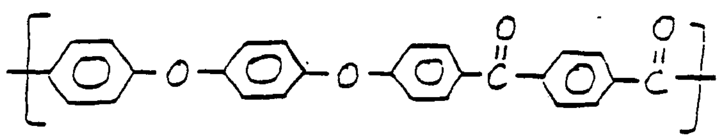 ;

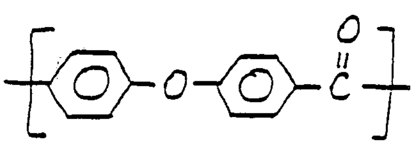 ;

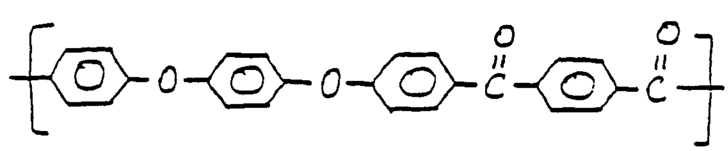 ;

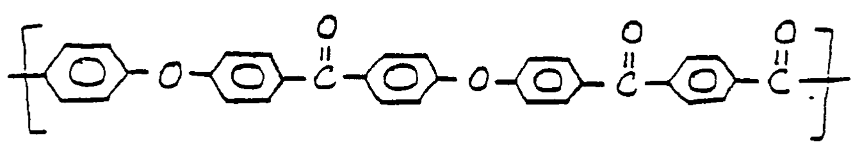 ;

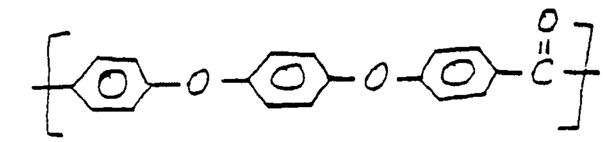 ;

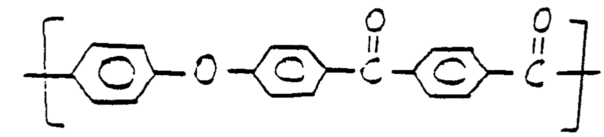 ;

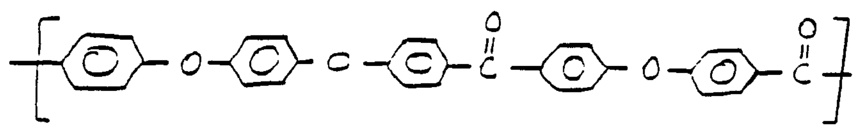 ;

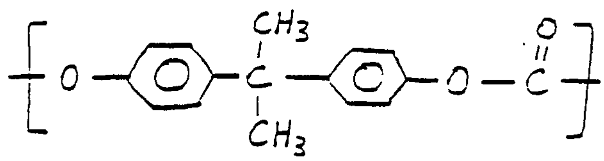 ;

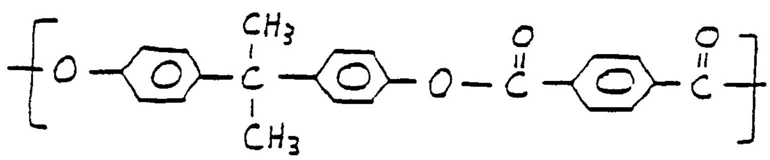 ;

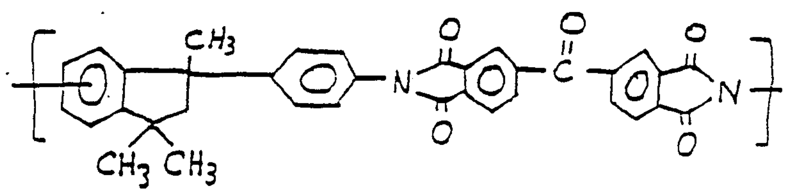 ; or

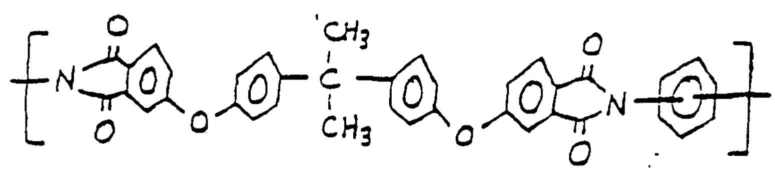 ;

and (b) a reactive second component compatible with the aromatic polymer which second component is an acetylene-terminated poly(imide), poly(isoimide) or a polymeric precursor thereof, and, when the aromatic polymer is a poly(aryl ether ketone) indicated by the third to eleventh (inclusive) repeat units listed above, may alternatively be a maleimide- or vinyl-terminated poly(imide), poly(isoimide), or a polymeric precursor thereof, said second component comprising from 1 to 300 second preponderant repeat units which are different from the first preponderant repeat units and being substantially free of elemental sulfur and being reactive divalent sulfur and said second component being present in an amount effective to substantially cure the composition.

The compositions which have been cured are surprisingly improved as adhesives, are capable of forming free standing films, are melt fusible, exhibit improved creep resistance, are not brittle, exhibit increased tensile strength, show improved resistance to cracking. Even further, it has been discovered that the compositions are useful as the matrix resin for reinforced composites. The composition is also useful in making an article comprising a substrate having on a surface thereof at least one layer of a cured, aromatic polymer-based composition of this invention. Of particular interest are articles containing a plurality of layers, each comprising a cured composition of this invention, with a conductive layer interposed between two adjacent layers. Such articles can be used as packaging-interconnect devices for integrated circuits.

In another embodiment, the invention relates to a method of bonding comprising 1) heating a composition to predetermined temperature; 2) positioning the composition between two substrates; 3) applying pressure; and 4) curing the bonded substrates for a predetermined time and temperature.

In a still further embodiment, the invention relates to a method of preparing an article a) depositiong on a surface of said substrate a first layer of a composition comprising a solution of a composition in a

solvent therefor; b) evaporating said solvent; and c) curing said composition.

In the curable composition of this invention, it is preferred that the aromatic polymer component comprises from about 99% to about 1% by weight of the composition and the reactive component comprises from about 1% to about 99% by weight to the composition. It is further preferred that the aromatic polymer component comprise at least 20%, more preferably at least 40% and most preferably at least 50% by weight of the composition. It is further preferred that the reactive aromatic component comprise from about 5% to about 35% by weight of the composition. It is further surprisingly found that some of the compositions of the invention are molecularly compatible forming molecularly compatible blends.

By preponderant repeat unit we mean that repeat unit which forms the largest fraction by weight of the repeat units present in either the first or second component.

The second reactive component of the composition of the invention comprises an aromatic organic material. The reactive component is selected such that it is compatible with the first component. The material may be a monomer, oligomer or polymer as desired having a second preponderant repeat unit of from 1 to 300 repeat units in the backbone. Preferably the material will have from 1 to 30 repeat units and more preferably from 1 to 10 repeat units. The reactive component is selected such that the second preponderant repeat unit is different from the first preponderant repeat unit selected for the aromatic first component. For example, where an acetylene terminated poly(imide) of a specific repeat unit is selected the reactive second component, the first component will not be a poly(imide) having the same specific repeat unit as the second preponderant repeat unit although a poly(imide) of different repeat unit could be selected. The reactive component further is substantially free of elemental sulfur and reactive divalent sulfur. This includes free sulfur, sulfide and all other forms of reactive divalent sulfur. The term "substantially free" is used herein to mean that relatively minor amounts of sulfur may be present, but in amounts which are insufficient to effect substantial cure of the composition without addition of a second reactive component in accordance with this invention.

The second reactive component is present in an amount such that on reacting it will substantially cure the composition. The term "substantially cure" is used herein to mean the composition on curing will have a gel percent as measured by the percent insolubles in chloroform of at least about 10%, preferably at least about 30% and more preferably at least about 50%. The exact mechanism by which curing of the composition takes place is not fully understood. It is believed that one or more of the following reactions takes place. The reactive component may crosslink with itself entrapping portions of the aromatic first component. The reactive component may crosslink with two or more sites on the first component forming a "bridge" crosslink. This bridge crosslink may be between sites on the same molecule or between sites on different molecules of the first component. Preferred reactive components which will cure the composition are poly(imides) with reactive groups such as aromatic poly(imides), poly(isoimides) and polymeric precursors thereof which are terminated with acetylene, maleimide or vinyl groups.

Acetylene terminated aromatic poly(imides), poly(isoimides), and polymeric precursors thereof and their preparation are described in Landis et al, Polym. Prepr., Am. Chem. Soc., Div. Polym., Chem., Vol. 15, No. 2, Jan 9, 1974, pp 537—41; U.S. Patent Nos. 3,845,018 (1974), 3,864,309 (1975) and 3,879,349 (1975) all to Bilow et al; and U.S. Patent No. 4,307,220 to Lucarelli et al (1981).

These addition curable compounds crosslink and cure without offgassing to produce low void mouldings and structural composites of high strength which are stable up to 370°C.

Preferred poly(imides) and poly(isoimides) are the terminal acetylenic-capped aromatic poly(imide) and poly(isoimide) oligomers from National Starch (Trade Mark "Thermid") having repeat units as follows:

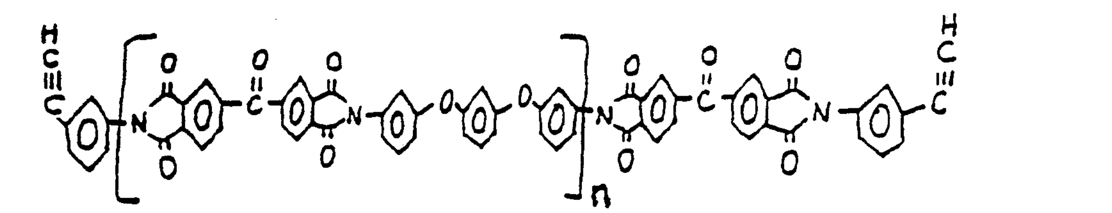

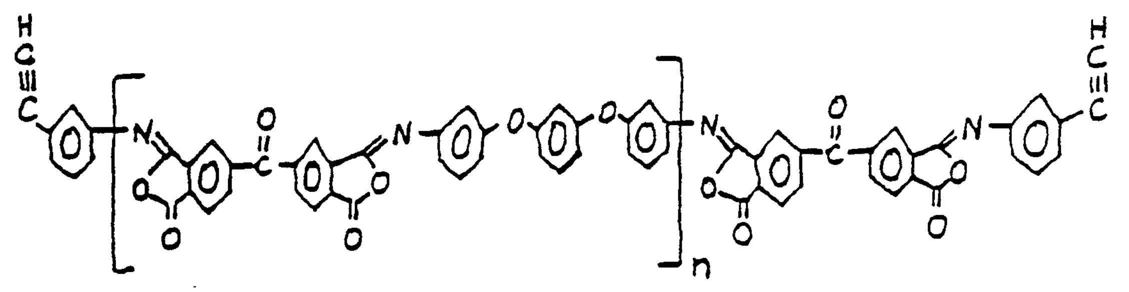

wherein n is from 1 to 300 but preferably from 1 to 30 and more preferably 1 to 10.

The poly(imides) and poly(isoimides) used in the curable composition of the invention may be formed *in situ* by forming the composition with a precursor of said poly(imide) or poly(isoimide). Said precursors may be converted to said poly(imides) or poly(isoimides) during cure or use of the composition as an adhesive or the like. Precursors of the poly(imides) and poly(isoimides) are known and described in, for example, the references cited above. Precursors that are preferred include the acetylenic-capped aromatic polyamic acid:

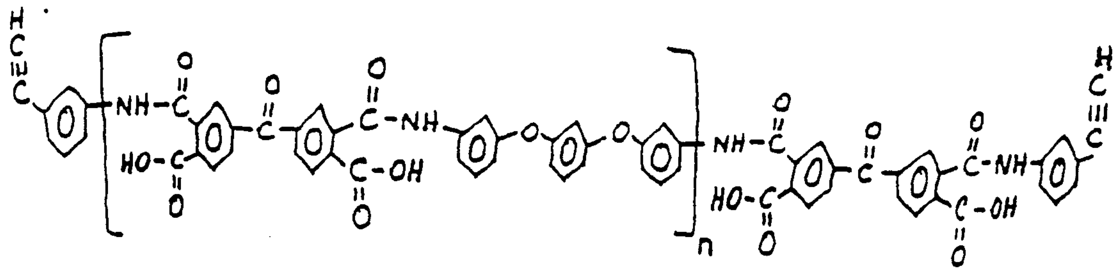

wherein n is from 1 to about 300 but preferably from 1 to about 30 and more preferably from 1 to about 10, and the acetylenic-capped aromatic imide monomeric mixture of:

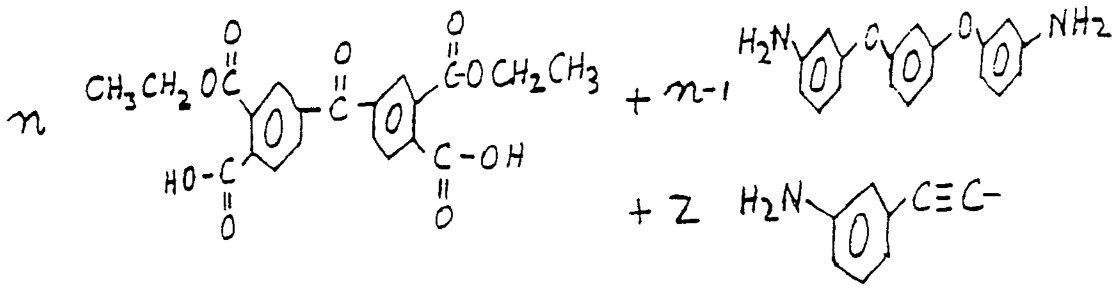

n + n-1 + Z

wherein n is from 2 to 300.

Maleimide and vinyl terminated poly(imides) may be made similarly to the acetylene terminated poly(imides) above or, for example, see Examples 9 to 11. See U.S. Patents Nos. 3,576,691 (1971) to Meyers; 3,380,964 (1964) to Grundshober et al; and 4,251,419 (1981) to Heilman et al.

Other preferred acetylene, maleimide and vinyl terminated poly(imides) include

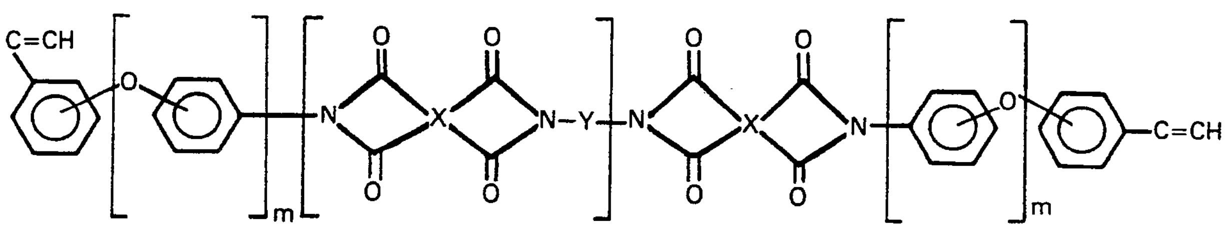

wherein n is 1 to 300 and m is 0 to 4,

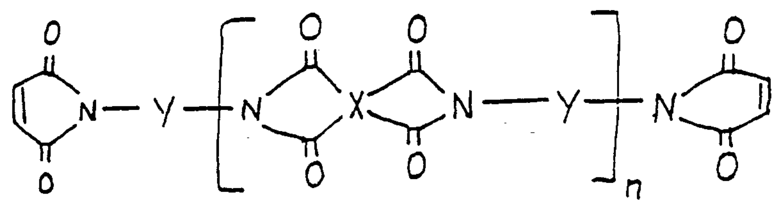

wherein n is 1 to 300,

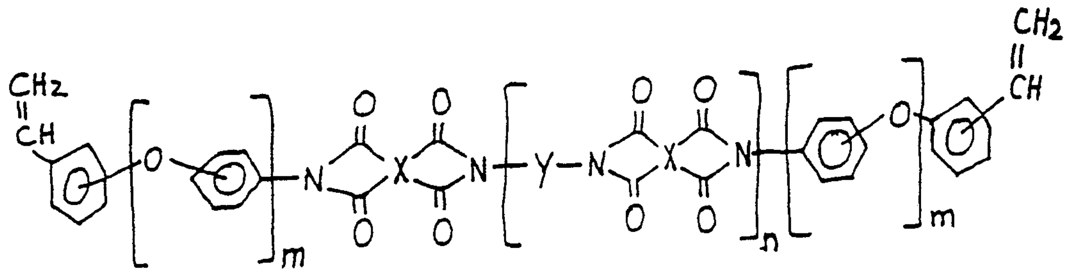

wherein n is 1 to 300 and m is 0 to 4
and wherein X and Y are the same as described for the non-reactive aromatic poly(imides) described hereinafter.

The first component of the composition comprises an aromatic polymer as indicated. It will be understood that references to aromatic polymers mean polymers which have aromatic groups incorporated in the repeat unit of their backbone chain, not merely appended as side groups to the chain as for example in the case of polystyrene. Preferably the aromatic polymers will have no two adjacent methylene groups in the repeat unit. More preferably any methylene groups in the monomer unit are linked to quaternary carbon atoms (i.e. aliphatic carbon atoms not linked to hydrogen). Most preferably, any aliphatic carbon atoms in the monomer unit linked to one or two hydrogen atoms is also linked to at least two quaternary carbon atoms.

A preferred aromatic poly(etherimide) has the structure

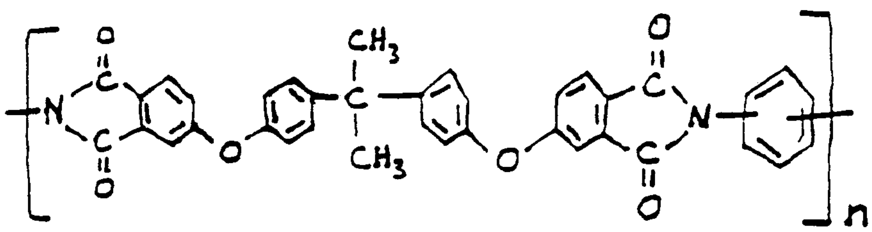

where n is greater than 1 but preferably from about 10 to about 10,000 or more and is available under the Trade Mark "Ultem" from General Electric, a high moleculär weight, amorphous and melt processable polymer. See also Makromol. Chem., Rapid Commun. 1, pages 667—670 (1980).

Preferred aromatic poly(sulfones) are of the formula:

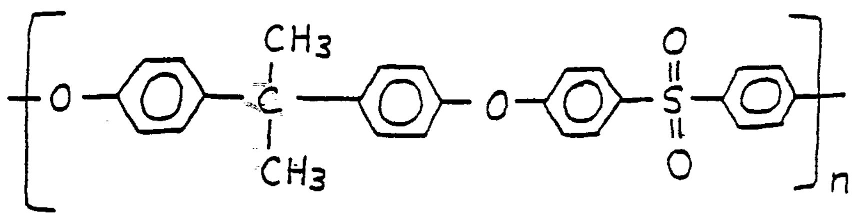

where n is greater than 1 but preferably from about 10 to about 10,000 or more and the poly(ether sulfone) having the formula:

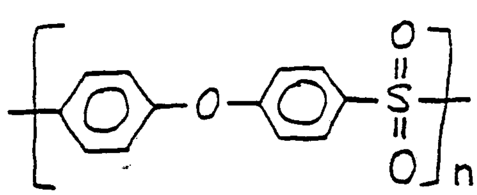

where n is greater than 1 but preferably from about 10 to about 10,000 or more.

Poly(aryl ether ketones) suitable for use in this invention can contain substituents on the aromatic rings. These substituents should not inhibit or otherwise interfere with the polymerization reaction to any significant extent. Substituents include, for example, phenyl, halogen, cyano, alkyl 2-alkynyl and the like.

Poly(aryl ether ketones) can be prepared by known methods of synthesis. Preferred poly(aryl ether

ketones) can be prepared by Friedel-Crafts polymerization of a monomer system comprising:

I (ii) phosgene or an aromatic diacid dihalide together with

(ii) a polynuclear aromatic comonomer comprising:

(a) H-Ar-O-Ar-H

(b) $H\text{-}(Ar\text{-}O)_n\text{-}Ar\text{-}H$ wherein n is 2 or 3

(c) $H\text{-}Ar\text{-}O\text{-}Ar\text{-}(CO\text{-}Ar\text{-}O\text{-}Ar)_m\text{-}H$ wherein m is 1, 2 or 3

or

II) an acide halide of the formula:

$$H\text{-}Ar''\text{-}O\text{-}[(Ar''\text{-}CO)_p\text{-}(Ar''\text{-}O)_q(AR''\text{-}CO)_r]_k\text{-}Ar''\text{-}CO\text{-}Z$$

wherein Z is halogen, k is 0, 1 or 2, p is 1 or 2, q is 0, 1 or 2 and r is 0, 1 or 2;

or

III) an acid halide of the formula:

$$H\text{-}(Ar''\text{-}O)_nAr''\text{-}Y$$

wherein n is 2 or 3 and Y is CO-Z or CO-Ar''-CO-Z where Z is halogen;

wherein each Ar'' is independently selected from substituted or unsubstituted phenylene, and substituted and unsubstituted polynuclear aromatic moieties free of ketone carbonyl or ether oxygen groups, in the presence of a reaction medium comprising:

A) A Lewis acid in an amount of one equivalent per equivalent of carbonyl groups present, plus one equivalent per equivalent of Lewis base, plus an amount effective to act as a catalyst for the polymerization;

B) a Lewis base in an amount from 0 to about 4 equivalents per equivalent of acid halide groups present in the monomer system;

C) a non-protic diluent in an amount from 0 to about 93% by weight, based on the weight of the total reaction mixture.

The aromatic diacid dihalide employed is preferably a dichloride or dibromide. Illustrative diacid dihalides which can be used include, for example

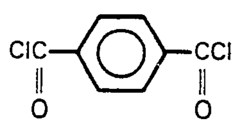
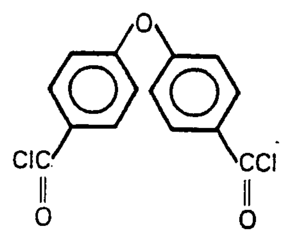
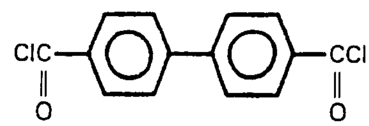

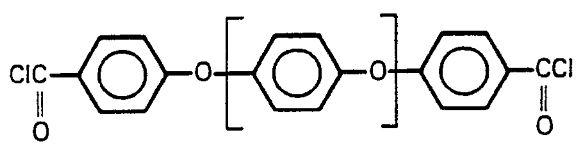
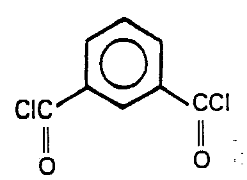

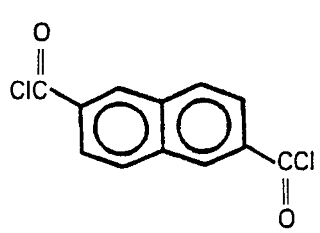
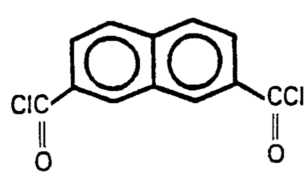
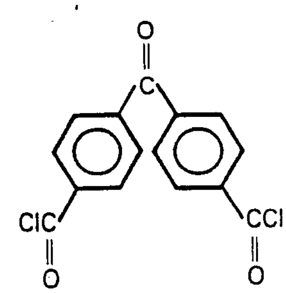

wherein a is 0—4.

Illustrated polynuclear aromatic comonomers which can be used with such diacid halides are:

(a) H-Ar''-O-Ar''-H, which includes, for example:

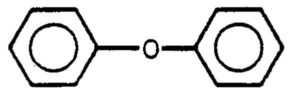

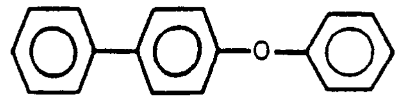

(b) H-(Ar''-O)$_n$-Ar''-H, which include, for example:

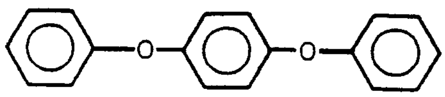 and 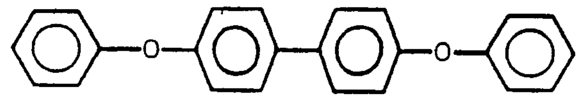

(c) H-Ar''-O-Ar''-(CO-Ar''-O-Ar'')$_m$-H, which includes, for example:

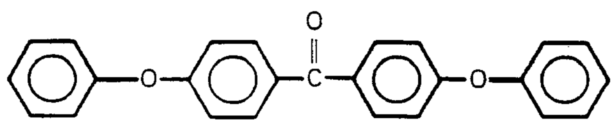

and

(d) H-(Ar''-O)$_n$-Ar''-CO-Ar''-(O-Ar'')$_m$-H which includes, for example:

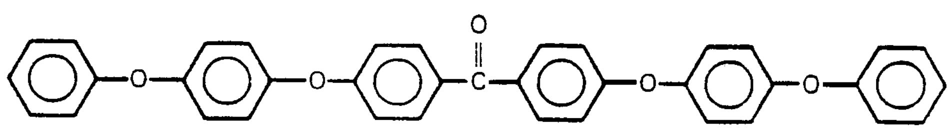

Monomer systems II and III comprise an acid halide. (The term acid halide is used herein to refer to a monoacid monohalide). In monomer system II, the acid halide is of the formula:

$$H\text{-}Ar''\text{-}O\text{-}[(Ar''\text{-}CO)_p\text{-}(Ar''\text{-}O)_q\text{-}(Ar''\text{-}CO)_r]_k\text{-}Ar''\text{-}CO\text{-}Z$$

Such monomers include for example, where k = 0

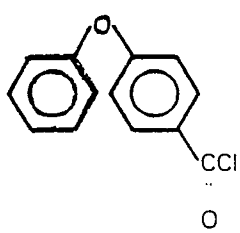

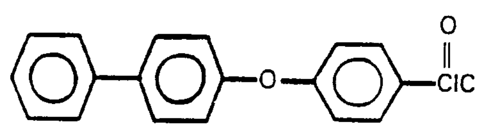

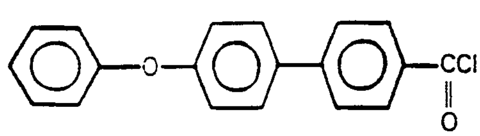

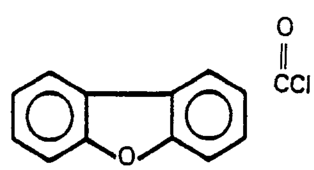

and wherein k = 1

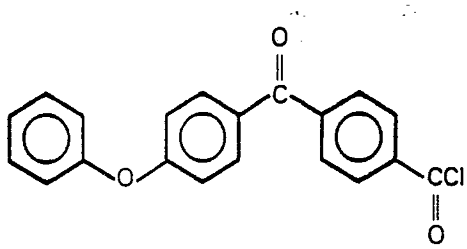

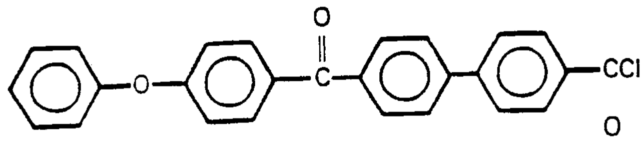

In monomer system III, the acid halide is of the formula

$$H\text{-}(Ar''\text{-}O)_n\text{-}Ar''\text{-}Y$$

Examples of such halides include

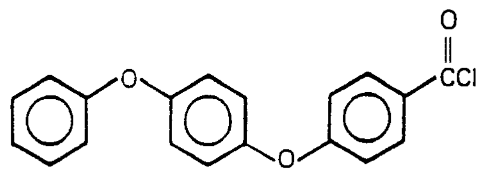

and

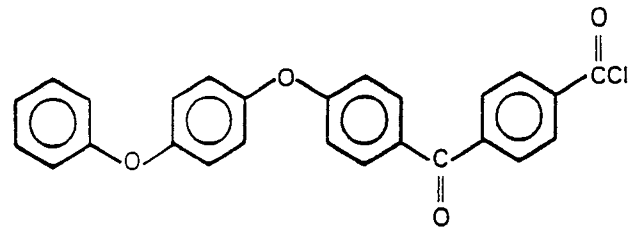

It is to be understood that combinations of monomers can be employed. For example, one or more diacid dihalides can be used with one or more polynuclear aromatic comonomers as long as the correct stoichiometry is maintained. Further, one or more acid halides can be included. In addition monomers which contain other linkages such as those specified above, can be employed as long as one or more of the comonomers used contains at least one ether oxygen linkage. Such comonomers include for example:

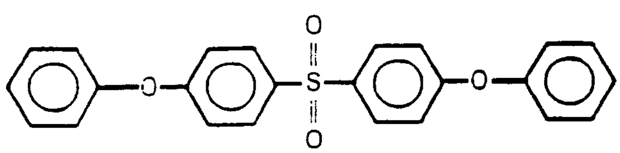

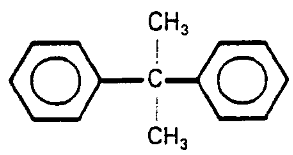

which can be used as the sole comonomer with an ether containing diacid dihalide or with phosgene or any diacid dihalide when used in addition to a polynuclear aromatic comonomer as defined in I(ii)(a), I(ii)(b), (I(ii)(c) or I(ii)(d). Similarly

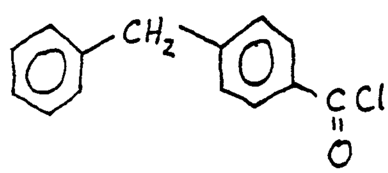

can be used as a comonomer together with an ether-containing polynuclear aromatic acid halide or as an additional comonomer together with a monomer system as defined in I.

The monomer system can also contain up to about 30 mole % of a comonomer such as sulfonyl chloride which polymerizes under Friedel-Crafts conditions to provide ketone-sulfone copolymers.

Further details of this process for producing poly(aryl ether ketones) can be found in EP—A—0124276.

Other processes for preparing these polymers can be found in U.S. Patent Nos. 3,953,400, 3,956,240, 3,928,295, 4,176,222 and 4,320,220.

Aromatic poly(imides) can be prepared by any suitable means for example see Journal of Polymer Science, Part A, Vol. 1, pages 3135—3150 (1963).

Especially preferred are the following aromatic poly(imides):

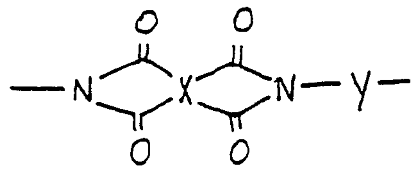

wherein X is:

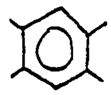 ; or 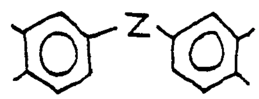

a) b)

wherein Y is

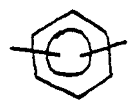 ; or 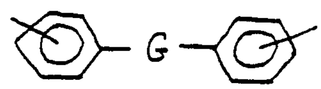

wherein G and Z each being the same or different are

a) a single bond
b) 0
c) S
d) $CH_2$
e) O-Ar-O, wherein Ar is

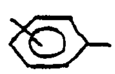 , 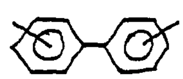 , 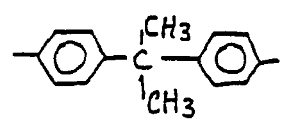 ,

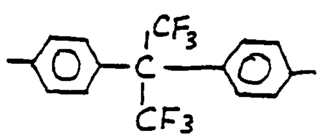 , 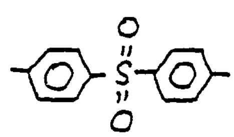

f) $—(C(CF_3)(C_6H_5)—$
g) CO
h) $SO_2$
i) $C(CF_3)_2$
j) $CF_2$

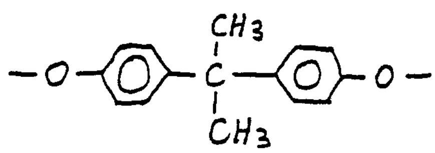 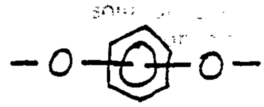

k) l)

m) $C(R_1)_2$ wherein $R_1$ is H or alkyl of 1 to 6 carbon atoms each $R_1$ being the same or different
n) —CH(OH—

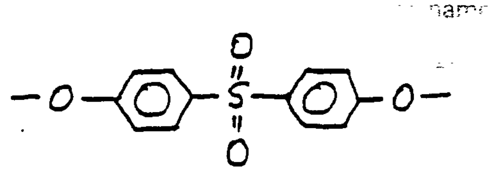

o)

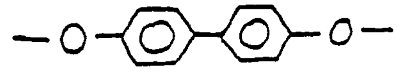

p)

Other preferred aromatic poly(imides) include poly(imides) having phenylindane diamine and/or dianhydride moieties incorporated into the poly(imide) backbone are described in U.S. Patent No. 3,856,752. A preferred such poly(imide) (Trade Mark "XU218") from Ciba-Geigy is of the formula:

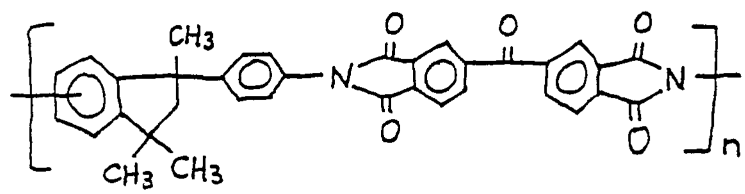

wherein n is greater than 1.

Poly(benzimidazopyrrolones) or pyrrones are well known in the art and can be prepared for example by methods taught in J. Macromol, Sci.-Revs. Macromol. Chem, C11(1), 143—176 (1974). Preferred pyrrones have the structure

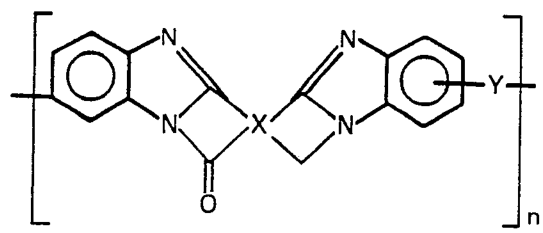

wherein X and Y are the same as the aromatic poly(imides) described above and n is an integer greater than 1.

Polyimide isoindoloquinazolinedione compounds (PIQ) are well known in the art. For example, see Polymer Materials for Electronic Applications, Fell and Wilkins, 1982, pages 123—138.

Particularly preferred as PIQ compounds of the formula

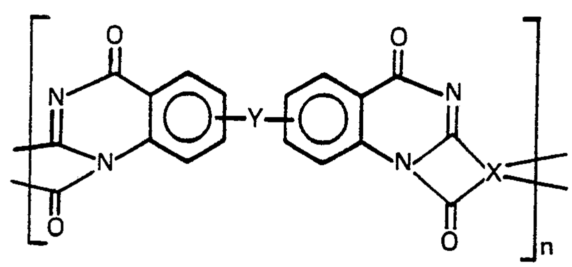

wherein X and Y are the same as the aromatic poly(imides) above and n is greater than 1.

It is understood that one or more reactive component and one or more aromatic polymer can be present in the composition to provide the desired physical properties of the final article. The polymers or copolymers can be used in any of the various commercial grades which may vary in average molecular weights, molecular weight distributions and may contain minor amounts of comonomer residues and the like.

A preferred embodiment having more than one aromatic polymer includes compositions comprising

1) an acetylene terminated aromatic poly(imide), poly(isoimide), or a polymeric precursor thereof;

2) a poly(etherimide); and

3) a poly(aryl ether ketone).

It is well known that most polymers are generally incompatible with each other. Most blends of two or more polymers contain the separate polymers as individual component domains or phases. Thus blends of what are termed compatible polymers generally are mechanically compatible only and exhibit properties which vary widely over the concentration range of the polymers. Such blends comprise a matrix polymer containing the other polymer as a dispersed or co-continuous phase. Such dispersed phases can be

microscopic in size sometimes giving the resulting blend of multiple phases the appearance of being a single phase. There are, however, a few pairs of polymers which are molecularly compatible, that is, they form a molecularly dispersed mixture comprising a single amorphous phase when they are blended together. Not only do such blends not separate into their individual amorphous components, but they are also characterized by having a single glass transition temperature (Tg) and optical transparency. Mechanically compatible blends, on the other hand, exhibit two or more Tg's characteristic of the Tg's of the individual components. By the term glass transition temperature is meant the temperature at which an amorphous polymer or the amorphous regions of a partially crystalline polymer changes to or from a hard and relatively brittle state to a more flexible or rubbery condition. Measurement of glass transition temperatures of polymer systems is described, for example, in *Thermal Characterization Techniques,* Slade, et al., Marcel Dekker, Inc., New York (1970).

It has been surprisingly found that blends of the invention consisting of an acetylene terminated poly(imide) or poly(isoimide) and a poly(ether imide), as described above, are molecularly compatible.

The compositions of the invention can contain various additives, in order to give any desired property to the polymer composition. For example, stabilizers, flame retardants, pigments, plasticizers, surfactants and the like can be present. Compatible or non-compatible polymers may also be added to give a desired property.

The compositions of the invention are melt fusible. By melt fusible is meant that the material can be heated without significant decomposition above its glass transition temperature, if it is amorphous or above its crystalline melting point if it has crystallinity, and coalesced under pressure. See e.g. U.S. Patent No. 4,485,140 to DuPont.

The compositions can be prepared by any convenient technique. For example, the components can be mixed on a two-roll mill, in an internal mixer (e.g. Trade Marks "Brabender" or "Banbury") or in a twinscrew extruder. They may also be prepared by precipitation from a solvent, or cast from solution or the like.

The composition generally can be substantially cured preferably at elevated temperature i.e. 250—350°C for 30 min. to 3 hours. Where appropriate, the composition may also be cured by radiation or other means as appropriate to the reactive component selected.

A shaped article of the composition can be formed before or after cure by known techniques depending on the desired shape. Films or coatings of the composition can be formed by extrusion, spraying, spin coating or casting especially using solvents, and fibers formed fibers by melt spinning or the like. Other articles may be injection moulded, compression moulded, pour moulded, blow moulded or the like with or without additives as previously described.

The compositions of the invention are especially useful as improved adhesives and as coatings such as semiconductor coatings including alpha particle barriers, coatings for passivation and mechanical protection.

The compositions of this invention are particularly advantageous in the preparation of a layered article, in particular a multi-layered article for use in electronic systems. The article comprises a substrate, for example of glass or ceramic material, with at least one layer comprising a cured, aromatic polymer-based composition of this invention deposited on a surface thereof. Generally a plurality of layers are successively deposited on the substrate and cured. One or more layers of conductive material can be interposed between two adjacent layers of the aromatic polymer-based composition. The conductive layer is generally not continuous or coextensive with the adjacent polymeric layers and typically forms a plurality of electrically conductive pathways. The conductive layer is preferably of metal but can comprise a semiconductive element.

In preparing such articles, the composition used is preferably highly resistant to hydrolysis and has a water absorption of less than about 2%, preferably less than about 1% when contacted with water at 90°C for 960 minutes. The composition preferably also is a dielectric having a dielectric constant less than about 5, preferably less than about 3.

The article is prepared by coating the aromatic polymer in the form of a solution, preferably by a spin coating technique, onto the substrate. The solvent is evaporated and the composition is cured at elevated temperatures. Typically, the thickness of the coating is about 5 to 40 microns. The conductive layer is applied over the polymeric layer using, for example, a sputtering technique with appropriate areas masked to create the desired conductive pathways. The next polymeric layer is applied in the same manner as the first. These two steps can be repeated until the desired multi-layered article is produced. The multi-layered article can be used, for example, as a packaging-interconnect device for integrated circuits.

The invention also relates to a reinforced composition or matrix comprising the blend of the invention either cured or uncured and a reinforcing component e.g. carbon or glass fibers or other polymeric fibers or the like such as poly(amides) (e.g. poly(aramide) sold by DuPont under the trade name Kevlar) forming a high strength composite.

The following examples are representative of the invention but not intended to be limiting. Substitution of additive materials, polymers, and conditions which are obvious from this disclosure are within the contemplation of the invention.

## DESCRIPTION OF THE PREFERRED EMBODIMENTS

In Example 1, Thermid resins MC-600, IP-600, IP-603, IP-615, and IP-630 obtained from National Starch

in powder form were blended with Ultem 1000, (poly(ether imide)), Victrex PEEK (poly(aryl ether ketone) from ICI), Victrex PES Union Carbide), and XU-218 (poly(imide) from Ciba-Geigy). Thermid, Ultem, Victrex, Udel, and XU-218 are believed to be Trade Marks.

Example 1 — Processing

Sample A

To 100 ml of methylene chloride was added 18 grams of poly(ethersulfone) Victrex PES 200p (available from ICI, Ltd.) and 2 grams of Thermid IP-600. The solution was stirred until all the solids dissolved. The mixture was precipitated by adding 100 ml of isopropyl alcohol and stirring rapidly. The resulting powder was dried in air for 4 hours and at 125°C for 4 hours. The dry powder was pressed at 315°C at 6.9 MPa (1000 psi) for 30 minutes to yield a transparent brown film.

Sample B

The procedure for Sample A was repeated but 16 grams of poly(ethersulfone) and 4 grams of Thermid IP-600 were used. The resulting yellow powder was pressed at 315°C at 6.9 MPa (1000 psi) for 30 minutes to yield a transparent brown film.

Sample C

The procedure for Sample A was repeated except 18 grams of poly(etherimide) (Ultem 1000 available from General Electric) and 2 grams of Thermid IP-600 was used. A light yellow powder resulted. The powder was pressed at 300°C at 0.69 MPa (100 psi) for 30 minutes to yield a transparent yellow film.

Sample D

The procedure for Sample A was repeated but 20 grams of Ultem 1000 poly(etherimide) and 10 grams of Thermid IP-603 were used. A yellow powder resulted.

Sample F

The procedure Sample A was repeated except 16 grams of XU-218 poly(imide) (available from Ciba-Geigy) and 4 grams of Thermid IP-600 were used. The resulting dark yellow powder was pressed at 300°C at 6.9 MPa (1000 psi) for 30 minutes to yield a transparent brown film which was insoluble in methylene chloride.

Sample G

To 100 ml of 1-methyl-2-pyrrolidinone was added 16 grams of Ultem 1000 poly(etherimide) and 4 grams of Thermid IP-630. After the solids dissolved the solution was poured into a rapidly stirring solution of isopropyl alcohol to precipitate the solids. The solids were filtered, washed with ethanol, and dried. The resulting yellow powder was pressed at 300°C at 0.69 MPa (100 psi) for 30 minutes to yield a transparent yellow film. The blend had a single Tg of 189.3°C.

Sample H

The procedure for Sample G was repeated except 20 grams of Ultem 1000 poly(etherimide) and 10 grams of Thermid IP—615 were used. The resulting yellow powder was pressed at 300°C at 0.69 MPa (100 psi) for 30 minutes to yield a transparent yellow film. The blend had a single Tg of 191.2°C.

Sample I

The procedure for Sample G was repeated except 16 grams of poly(ethersulfone) (Victrex PES) and 4 grams of Thermid IP-630 were used. A yellow powder resulted.

Sample J

A mixture containing 90 weight percent poly(aryletherketone) power (Victrex PEEK 45G available from ICI) and 10 weight percent Thermid IP-630 powder were added to a Brabender mixer. The mix temperature was about 380°C. The resulting solid was pressed at 400°C at 6.9 MPa (1000 psi) for 5 minutes to yield a transparent material.

Sample K

The procedure for Sample J was repeated except a mixture containing 50 weight percent Victrex PEEK poly(aryletherketone) powder and 50 weight percent Thermid IP-630 were used. A transparent brown material was obtained.

Sample L

A mixture of 90 weight percent poly(aryletherketone) (Victrex PEEK 45G) powder and 10 weight percent of Thermid MC-600 powder was extruded on a Brabender twin screw extruder. The melt temperature was about 380°C. A brown extrudate was obtained and pelletized.

Example 2 — Blend Morphology

Certain of the compositions were examined by scanning electron microscopy (SEM). Blends of Ultem 1000 poly(ether imide) with Thermid IP-600 and Thermid IP-630 at ratios of 80/20 and 65/35 and blends of poly(ether sulfone) with Thermid MC-600 at ratios of 80/20 and 67/33, respectively have been examined. No phase separation could be observed in any of the samples evaluated either before or after curing, which indicates continuous, sub-microscopic phase domains.

Example 3 — Mechanical Properties

Th mechanical properties of Ultem poly(etherimide) and a 90/10 blend of Ultem/Thermid IP-600 (tested at 200°C) before and after aging at 200°C are listed in Table 1. Before aging Ultem has a tensile strength of 28.36 MPa (4110 psi) and 83% elongation versus 22.34 MPa (3238 psi) and 58% elongation for the Ultem/Thermid IP-600 blend. After 7 days aging at 200°C the Ultem/Thermid IP-600 blend has an almost 100% increase in tensile strength to 44.28 MPa (6418 psi) with a drop in elongation to 10%. The Ultem shows a 10% increase in tensile strength to 31.28 MPa (4533 psi) and a drop in elongation to 3% after 7 days aging at 200°C. Clearly the Ultem/Thermid IP-600 blend has much better performance at elevated temperatures than does pure Ultem.

Example 4 — Cure Conditions

Tables 2, 3, 4 and 5 list the gel levels for various cure conditions for Ultem/Thermid IP-600, Victrex PES/Thermid IP-600, Thermid IP-603 blends, and Thermid IP-630 blends, respectively. Gel levels were determined as percent insolubles in chloroform.

TABLE 1

THERMAL STABILITY OF ULTEM/THERMID IP-600 (90/10) RESIN* TESTED AT 200°C

| MATERIAL | AGING TIME (DAYS) | TENSILE STRENGTH MPa (PSI) | % ULTIMATE ELONGATION |
|---|---|---|---|
| ULTEM | 0 | 28.36 (4,110) | 83 |
| ULTEM/IP-600 | 0 | 22.34 (3,238) | 58 |
| ULTEM | 7 | 31.28 (4,533) | 3 |
| ULTEM/IP-600 | 7 | 44.28 (6,418) | 10 |
| ULTEM/IP-600 | 14 | 41.88 (6,070) | 5 |

*ALL SAMPLES PRESSED AT 315°C (600°F)
1 HOUR BEFORE AGING AT 200°C

TABLE 2

PERCENT GEL FORMATION FOR ULTEM/THERMID IP600 BLENDS

| ULTEM/THERMIC IP-600 | CURE TEMP, °C | CURE TIME (MIN) | %GEL |
|---|---|---|---|
| 95/5 | 287 | 900 | 60 |
| 95/5 | 315 | 900 | 40 |
| 90/10 | 260 | 30 | 20 |
| 90/10 | 260 | 60 | 38 |
| 90/10 | 260 | 120 | 47 |
| 90/10 | 287 | 10 | 30 |
| 90/10 | 287 | 30 | 45 |
| 90/10 | 287 | 45 | 48 |
| 90/10 | 287 | 60 | 52 |
| 90/10 | 315 | 30 | 52 |
| 90/10 | 315 | 120 | 62 |
| 80/20 | 315 | 900 | 100 |
| 80/20 | 350 | 20 | 61 |

TABLE 3

PERCENT GEL FORMATION FOR
POLYETHERSULFONE/THERMID IP-600 BLENDS

| VICTREX PES/THERMID IP-600 | CURE TEMP (°C) | CURE TIME (MIN) | % Gel |
|---|---|---|---|
| 90/10 | 315 | 30 | 21 |
| 80/20 | 315 | 10 | 70 |
| 80/20 | 315 | 30 | 78 |
| 80/20 | 315 | 900 | 100 |
| 80/20 | 343 | 60 | 66 |
| 80/20 | 350 | 20 | 41 |
| 80/20 | 350 | 120 | 100 |

TABLE 4

PERCENT GEL FORMATION FOR THERMID IP-603 BLENDS

| BLEND | RATIO | CURE CONDITION | PERCENT GEL |
|---|---|---|---|
| Ultem/IP-603 | 90/10 | 30 min. 287°C | 38 |
| Ultem/IP-603 | 90/10 | 60 min. 287°C | 42 |
| Ultem/IP-603 | 80/20 | 30 min. 287°C | 56 |
| Ultem/IP-603 | 80/20 | 60 min. 287°C | 61 |
| Ultem/IP-603 | 67/33 | 30 min. 287°C | 81 |
| Victrex PES/IP-603 | 90/10 | 30 min. 315°C | 21 |
| Victrex PES/IP-603 | 90/10 | 60 min. 315°C | 10 |
| Victrex PES/IP-603 | 80/20 | 10 min. 315°C | 70 |
| Victres PES/IP-603 | 80/20 | 30 min. 315°C | 78 |
| Victrex PES/IP-603 | 80/20 | 60 min. 315°C | 66 |

TABLE 5

PERCENT GEL FORMATION FOR THERMID IP-630 BLENDS

| BLEND | RATIO | CURE CONDITIONS | PERCENT GEL |
|---|---|---|---|
| Ultem/IP-630 | 80/20 | 30 min. 300°C | 71 |
| Victrex PES/IP-630 | 80/20 | 30 min. 315°C | 90.5 |
| Victrex PES/IP-630 | 67/33 | 30 min. 300°C | 98 |

The most significant finding here is that addition of approximately 20% Thermid IP-600 or MC-600 to Ultem or Victrex PES leads to 100% gel formation. Fully cured blends (80/20 ratios) do not dissolve or swell significantly when exposed to methylene chloride (solvent for both Ultem and PES). Even the addition of only 10% Thermid IP-600 can lead to gel levels greater than 60%. Therefore much improved solvent resistance is achieved.

Example 5 — Adhesive Properties

Table 6 lists the lap shear strengths for stainless steel to stainless steel adhesive bonds using Thermid blends as hot melt thermosetting adhesives. At 200°C the blends show much higher bond strengths than pure Ultem. Addition of 10% or 20% Thermid IP-600 to Ultem leads to a 25% increase in the lap shear strength at 200°C. The lap shear increase from 8.56 MPa (1240 psi) to about 10.63 MPa (1540 psi). At 35% Thermid IP-600/65% Ultem the lap shear increases to 11.71 MPa (1697 psi) (37% increase). Victrex PES/Thermid MC-600 blends can also be used as adhesive but they had much lower lap shear strengths than the Ultem/Thermid IP-600 blends at room temperature.

Example 6 — Composite Matrix Application

One of the applications of blends of the invention is as a matrix resin in fiber reinforced composites. The blends will offer improved thermal stability, creep resistance, solvent resistance, and high continuous use temperature.

Ultem/Thermid IP-600 and Victrex PES/Thermid IP-600 blends have been impregnated on both Kevlar poly(amide) fiber produced by duPont and carbon fibres.

A high modules carbon fiber (Celion 6000 ANS available from Celanese Corporation) was impregnated with an Ultem 1000/Thermid IP-600 (95/5) blend in the following fashion: The continuous fiber was passed through a solution of 95 grams Ultem 1000 and 5 grams Thermid IP-600 in 380 grams chloroform at a rate of 10 feet per minute. Immediately after leaving the solution, the wet fiber was passed through a drying tower at 60°C and a second drying tower at 120°C. The dry prepreg tow was passed between 2 hot rollers to smooth and flatten the tow. The prepreg (60% by volume carbon fiber) was woven into a 2.54 cm × 2.54 cm (2 inch by 2 inch) sample, consolidated at 290°C 0.69 MPa (100 psi) for 30 minutes and post cured at 280°C for 24 hours in air. The consolidated sample showed an 8% weight loss and no delamination after 24 hour immersion in either chloroform or dichloromethane. A similarly prepared sample using Ultem 1000 as the matrix resin completely delaminated and the matrix resin dissolved when immersed 24 hours in chloroform or dichloromethane.

Example 7 — Ultem/Thermid Adhesive Film Protection

To 100 ml of dichloromethane was added 18 grams of Ultem 1000 and 2 grams of Thermid IP-600. The solution was stirred until the solids dissolved. The mixture was precipitated by adding 100 ml of isopropyl alcohol and stirring rapidly. The resulting powder was dried in air for 12 hours and at 125°C for 4 hours. The dry powder was pressed at 275°C at 6.9 MPa (1000 psi) for 1 minute to yield an amber film.

The above procedure was repeated using 16 grams of Ultem and 4 grams of Thermid IP-600. An amber film was also obtained.

The above procedures were repeated using Thermid IP-603 in place of Thermid IP-600. Amber films were obtained.

TABLE 6

LAP SHEAR STRENGTHS FOR STAINLESS STEEL ADHESIVE BONDS (1.27cm) (½") OVERLAP)
(U=Ultem, T=Thermid, V=Victrex PES)

| MATERIAL | RATIO | LAP SHEAR MPa (PSI) @ ROOM TEMP | LAP SHEAR MPa(PSI) @ 200°C |
|---|---|---|---|
| U | 100 | 13.02 (1887) | 8.56 (1240) |
| U/T IP-600 | 90/10 | - | 10.67 (1547) |
| U/T IP-600 | 80/20 | 19.87 (2880) | 10.53 (1526) |
| U/T MC-600 | 65/35 | - | 11.71 (1697) |
| U/T IP-603 | 90/10 | - | 11.89 (1723)* |
| U/T IP-603 | 80/20 | 16.15 (2340) | 11.72 (1698)* |
| V/T MC-600 | 80/20 | 13.14 (1905) | - |
| V/T MC-600 | 67/33 | 11.25 (1630) | - |
| U/T IP-615 | 80/20 | 16.39 (2375) | - |
| U/T IP-630 | 80/20 | 19.52 (2829) | - |
| U/T IP-630 | 80/20 | 12.56 (1821) | - |

Cure Conditions: 25 minutes, 315°C, 0.69 MPa (100 psi)

*Ultem/Thermid IP-603 adhesives cured at 275°C, 20 minutes, at 0.69MPa (100 psi) pressure. The adhesive films were prepared in the same manner described in Example 1 but Thermid IP-603 was substituted for Thermid IP-600. All samples had a single Tg.

Example 8 — Ceramic Coating

Sample A

To 100 ml of dry 1-methyl-2-pyrrolidinone was added 15 grams of XU-218 and 5 grams of Thermid IP-600. The solution was stirred until the solids dissolved. The solution was poured on to a 10.2 cm × 10.2 cm (4 inch by 4 inch) ceramic substrate which was spinning at 2000 rpm. After 30 seconds the ceramic was stopped and placed in an oven at 80°C for 1 hour, 125°C for 1 hour, 200°C for 30 min. and 250°C for 30 minutes. A light yellow coating resulted. The bond strength of the coating to the ceramic at room temperature was 11.54 MPa (1673 psi).

Sample B

The above experiment was repeated but 16 grams of Ultem and 4 grams of Thermid IP-600 were used. A light yellow coating resulted. Bond strength of the coating to ceramic was greater than 62.79 MPa (9700 psi).

Sample C

To a solution of 35.0 g (0.207 moles) 2,2-bis(4(4-aminophenoxy)phenyl) propane and 120.0 g Thermid LR-600 in 300 g-2-methoxyethyl ether was added dropwise a solution of 66.75 g (0.207) moles 3,3',4',4'-benzophenone tetracarboxylic dianhydride (BTDA) in 260 g 1-methyl-2-pyrrolidinone. External cooling was used to keep the reaction temperature below 20°C. After addition of the BTDA solution was complete, the mixture was stirred an additional 3 hours. A 5 ml sample of the solution was spin coated on to a 10,16 cm (4 inch) by 10,16 cm (4 inch) ceramic substrate (1000 rpm for 15 seconds) and dried and cured under the following conditions: 15 minutes at 90°C, 25 minutes at 150°C, 15 minutes at 200°C, 30 minutes at 350°C, and 30 minutes at 200°C. A second 5 ml of solution was applied, dried and cured as described above. No cracks in the first or second layers of cured polyimide could be detected when the sample was examined with an optical microscope (50X).

To a solution of 0.85 g (0.00207 moles) 2,2-bis[4-(4-aminophenoxy)-phenyl] propane mixture of 2.5 g 2-methoxyethyl ether and 0.5 1-methyl-2-pyrrolidinone (NMP) was added a solution of 0.667 g (0.00207 moles) BTDA in 2.6 g NMP. The solution was stirred for an additional 3 hours. A 2.5 ml sample was spin coated on to a 10,16 cm (4 inch) by 10,16 cm (4 inch) ceramic substrate (1000 rpm for 15 seconds) and dried and cured as described above. A second 2.5 ml of solution was applied, dried and cured as described above. The crude polyimide was examined with an optical microscope (50X) and severe cracking in the first layer of polyimide was observed.

The following three examples disclose a method for making other reactive second components where the reactive end group is a maleimide or vinyl group.

Example 9

To a solution of 5.0 g (0.0122 moles) 2,2-bis[4-(4-amino-phenoxy)-phenyl] propane in 75 ml of dry 1-methyl-2-pyrrolidinone was added 2.0 g (0.0062 moles) of BTDA and 1.2 g (0.0122 moles) maleic anhydride. After stirring under nitrogen for 45 minutes at room temperature, 4.1 g 4,4'-bis(4-aminophenoxy)biphenyl followed by 4.9 g (0.0.11 moles) 2,2-bis(3,4-dicarboxyphenyl) hexafluoropropane dianhydride was added. After 25 minutes, the mixture was coated onto a ceramic substrate, dried and cured (10 minutes at 100°C, 10 minutes at 200°C, and 20 minutes at 325°C). A light brown, pin hole free coating resulted.

Example 10

To a solution of 1.5 g (0.0075 moles) 4,4'-diaminodiphenyl ether and 1.4 g (0.015 moles) 3-aminostyrene in 15 ml of dry 1-methyl-2-pyrrolidinone is added 4.8 g (0.015 moles) of BTDA. After stirring 24 hours at room temperature, 10 ml acetic anhydride and 3 ml pyridine is added to imidize the vinyl terminated amic acid oligomer. Coagulation in methanol affords 7.1 g terminated polyimide oligomer (VTPO).

To a solution of 3.0 g Victrex PES (polyethersulphone) in a mixture of 14 g N,N-dimethylformamide and 1 g m-xylene is added 1.0 g VTPO. The solution is coated on to a metal substrate, dried and cured (10 minutes at 100°C, 10 minutes at 200°C, and 20 minutes at 325°C).

Example 11

To a solution of 1.5 g (0.0036 moles) 2,2-bis(4-(4-aminophenoxy)-phenyl) propane in 15 ml dry 1-methyl-2-pyrrolidinone is added 0.59 g (0.0018 moles) BTDA and 0.36 g (0.0036 moles) maleic anhydride. After stirring 24 hours at room temperature, 10 ml acetic anhydride and 3.0 ml pyridine is added to imidize the amic acid oligomer. Coagulation in methanol affords 2.3 g maleimide terminated polyimide oligomer (MTPO).

To a solution of 4.0 g Ultem 1000 in 17 g 1-methyl-2-pyrrolidinone is added 1.0 g MTPO. The solution is coagulated using a non-solvent, such as isopropyl alcohol, and dried to yield a granular powder. The dry powder is pressed at 250°C at 6.9 MPa (1000 psi) for 1 minute to yield an amber film.

## Claims

1. A curable composition comprising (a) an aromatic polymer first component which is a pyrrone, or a polyimide isoindoloquinazolinedione, or an aromatic polymer having a first preponderant repeat unit selected from

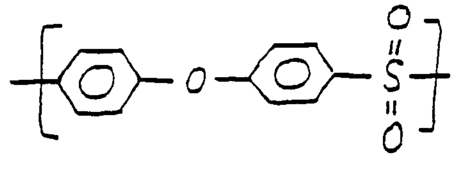 ;

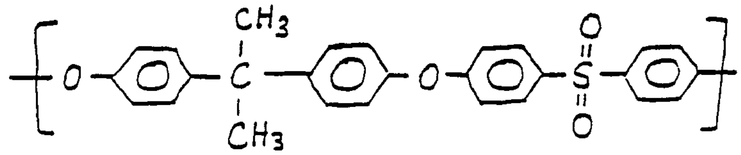 ;

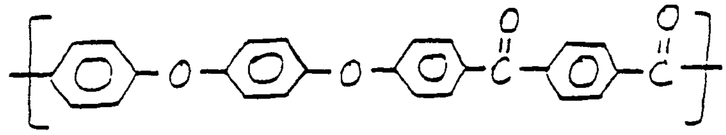 ;

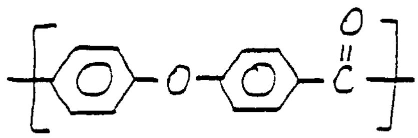 ;

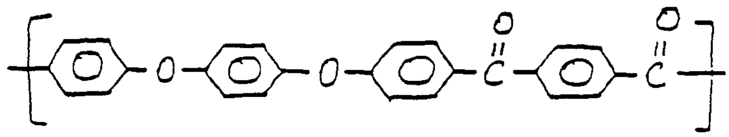 ;

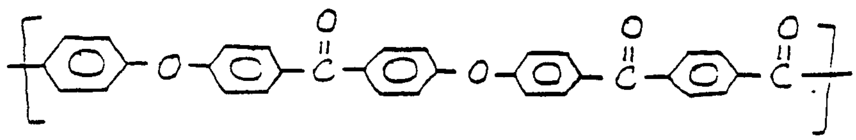 ;

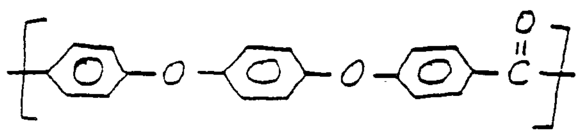 ;

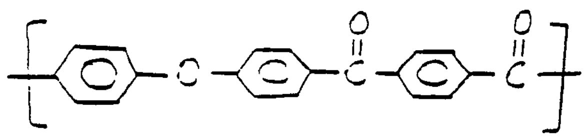 ;

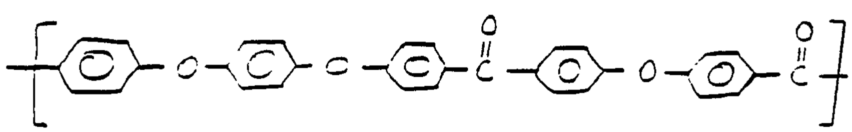 ;

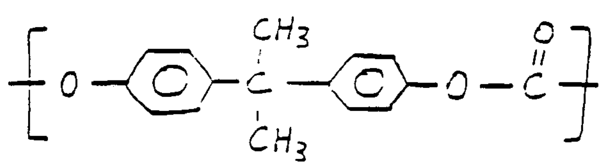 ;

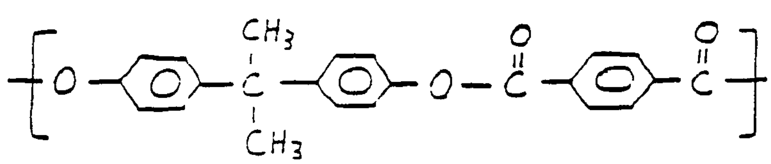 ;

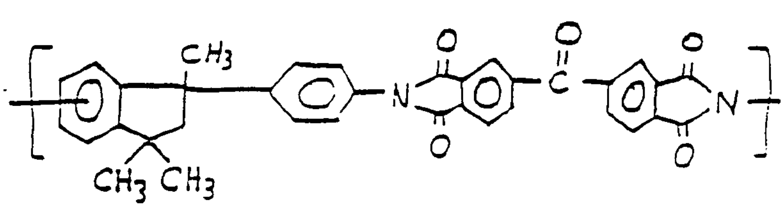 ; or

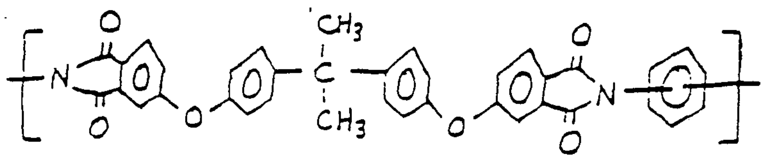 ;

and (b) a reactive second component compatible with the aromatic polymer which second component is an acetylene-terminated poly(imide), poly(isoimide) or a polymeric precursor thereof, and, when the aromatic polymer is a poly(aryl ether ketone) indicated by the third to eleventh (inclusive) repeated units listed above, may alternatively be a maleimide- or vinyl-terminated poly(imide), poly(isoimide), or a polymeric precursor thereof, said second component comprising from 1 to 300 second preponderant repeat units which are different from the first preponderant repeat units and being substantially free of elemental sulfur and reactive divalent sulfur and said second component being present in an amount effective to substantially cure the composition.

2. A composition according to claim 1, wherein the second component is an acetylene terminated aromatic material of the formula:

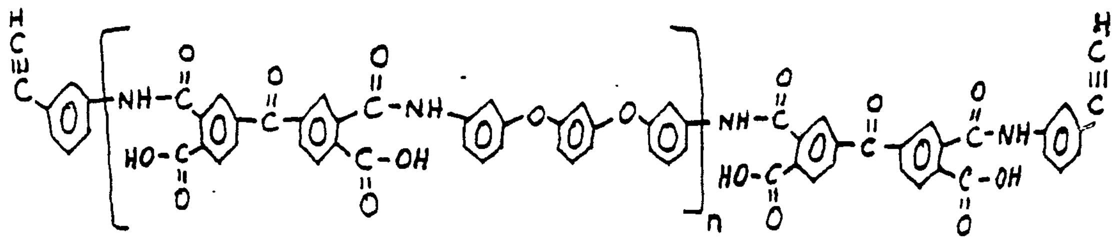

where n is 1 to 300.

3. A composition according to claim 2, wherein n is 1 to 30.

4. A composition according to claim 1, wherein the second component is an acetylene terminated poly(isoimide) of the formula:

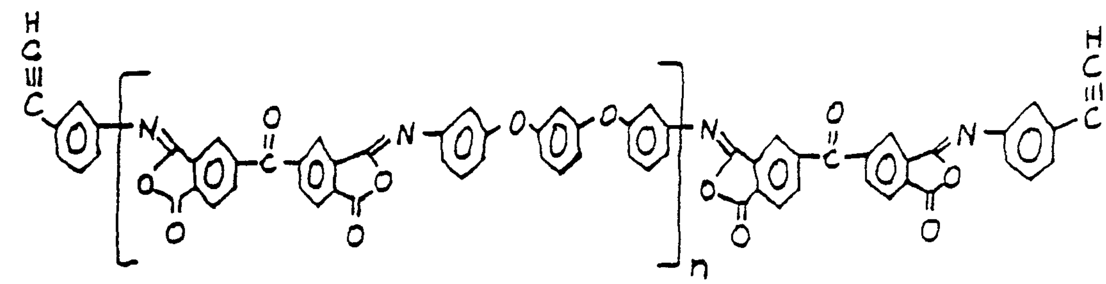

where n is 1 to 300.

5. A composition according to claim 4, wherein n is 1 to 30.

6. A composition according to claim 1, wherein the second component is derived from a monomeric mixture of compounds of the formula:

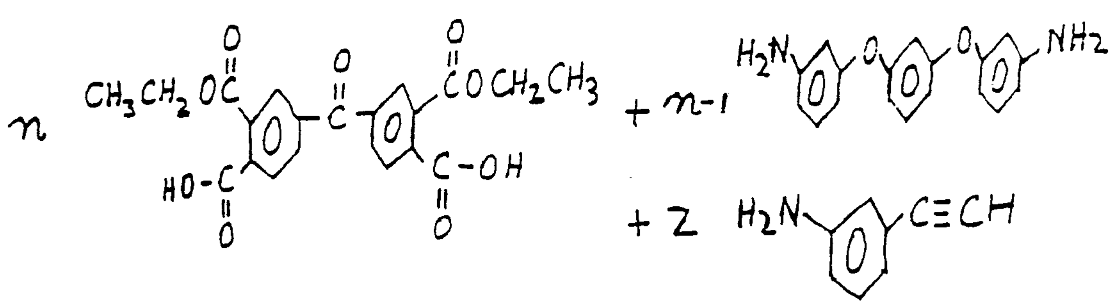

wherein n is from 2 to 300.

7. A composition according to claim 1, wherein the second component is an acetylene terminated poly(imide) of the formula:

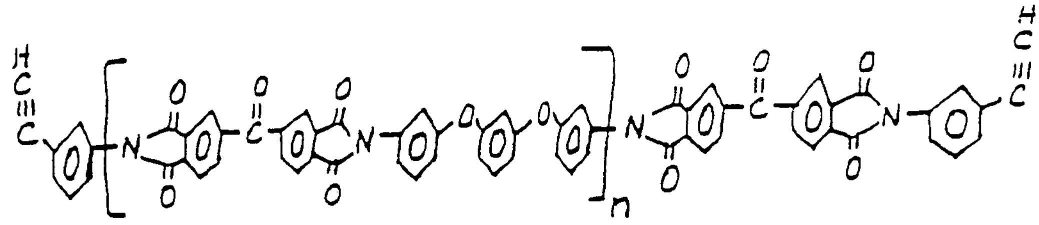

wherein n is 1 to 300.

8. A composition according to claim 1, wherein n is 1 to 30.

9. A composition according to any of claims 1 to 8, wherein the first component is a poly(aryl ether ketone) or a poly(ether imide), and the second component is an acetylene-terminated poly(imide), poly(isoimide), or a polymeric precursor thereof.

10. A composition according to any of claims 1 to 8, wherein the first component is a mixture of a poly(aryl ether ketone) and a poly(ether imide), and the second component is an acetylene-terminated aromatic poly(imide), poly(isoimide), or a polymeric percursor thereof.

11. A composition according to any preceding claim, wherein the reactive second component comprises from 5% to 35% by weight of the composition.

12. A composition according to any preceding claim, which further comprises a reinforcing filler.

13. A composition according to claim 12, wherein the reinforcing filler is carbon fiber, poly(amide) fiber or glass fiber.

14. A composition according to any preceding claim, which is substantially cured.

15. An article comprising a substrate having on a surface thereof at least one layer of a composition according to any preceding claim.

16. An article in accordance with claim 15, wherein said substrate has on the surface thereof a plurality of layers, each of which comprises a composition according to any of claims 1 to 13.

17. An article in accordance with claim 16, wherein there is a layer of conductive material interposed between two adjacent layers of the said composition.

18. An article in accordance with claim 17, wherein said layer of conductive material is non-continuous and forms a plurality of conductive paths across the article.

19. An article in accordance with claim 18, which further comprises at least one semi-conductor element.

20. A method of bonding comprising:

(1) compressing a composition according to any of claims 1 to 13 between two substrates; and

(2) curing the compressed composition at elevated temperature.

21. A method of preparing an article, comprising

(a) depositing on a surface of a substrate solution of a composition according to any of claims 1 to 13;

(b) evaporating the solvent from said solution to form a first layer of the said composition on the substrate; and

(c) curing said composition.

22. A method in accordance with claim 21, which comprises the step of applying a layer of conductive material onto said first layer.

23. A method in accordance with claim 22, wherein the conductive layer is non-continuous and forms a plurality of conductive paths across said first layer.

24. A method in accordance with any of claims 21 to 23 which comprises the step of depositing over said first layer, and over the layer of a composition according to any of claims 1 to 13.

**Patentansprüche**

1. Härtbare Zusammensetzung, umfassend (a) eine aromatische polymere erste Komponente, die ein Pyron oder ein Polyimid-Isoindolchinazolindion oder ein aromatisches Polymer ist mit einer ersten überwiegenden Repetiereinheit, ausgewählt aus:

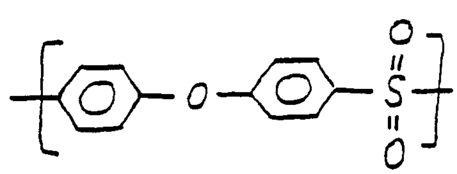 ;

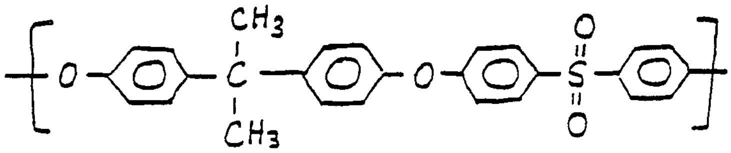

;

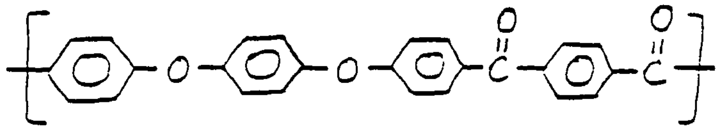

;

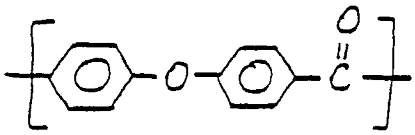

;

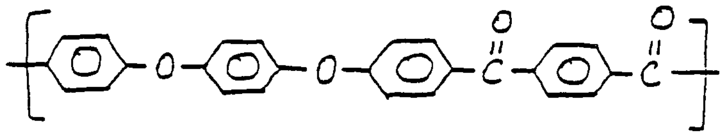

;

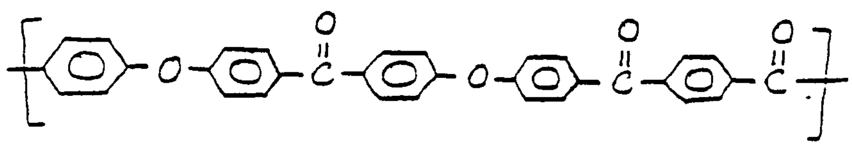

;

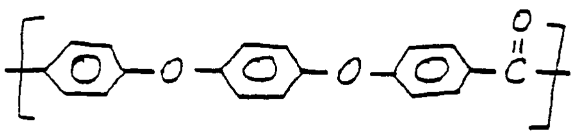

;

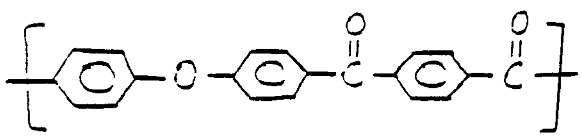

;

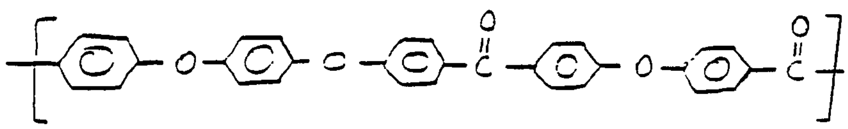

;

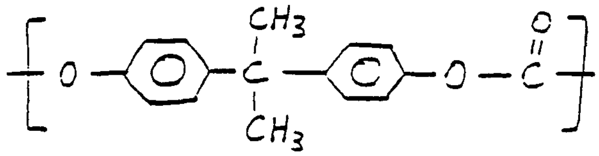

;

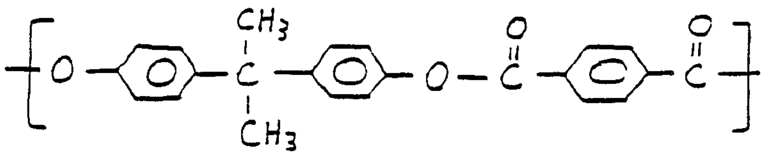

;

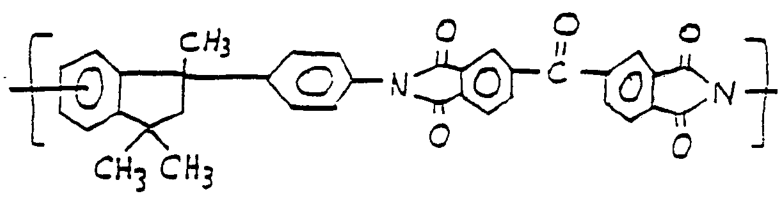

; oder

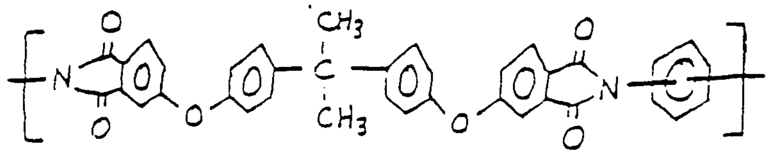
;

und (b) eine mit dem aromatischen Polymeren kompatible reaktionsfähige zweite Komponente, die ein Acetylen-terminiertes Polyimid, Polyisoimid oder eine polymere Vorstufe davon ist und die, wenn das aromatische Polymere ein durch die dritte bis (einschließlich) elfte der obengenannten Repetiereinheiten gekennzeichnetes Poly(aryletherketon) ist, alternativ ein Maleinimid- oder Vinyl-terminiertes Polyimid, Polyisoimid oder eine polymere Vorstufe davon sein kann, wobei die zweite Komponente 1 is 300 zweite überwiegende Repetiereinheiten umfaßt, die von den ersten überwiegenden Repetiereinheiten verschieden und im wesentlichen frei von elementarem Schwefel und reaktionsfähigem zweiwertigem Schwefel sind, und wobei die zweite Komponente in einer Menge vorhanden ist, die wirksam ist, um die Zusammensetzung im wesentlichen zu härten.

2. Zusammensetzung nach Anspruch 1, wobei die zweite Komponente ein Acetylen-terminierter aromatischer Stoff der folgenden Formel ist:

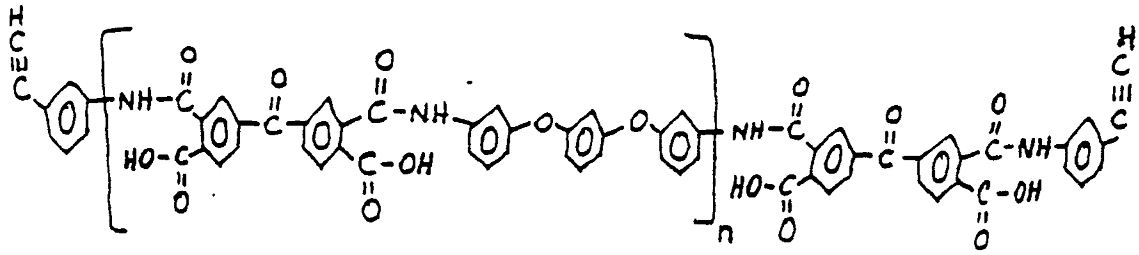

wobei n = 1 bis 300.

3. Zusammensetzung nach Anspruch 2, wobei n = 1 bis 30.

4. Zusammensetzung nach Anspruch 1, wobei die zweite Komponente ein Actylen-terminiertes Polyisoimid der folgenden Formel ist:

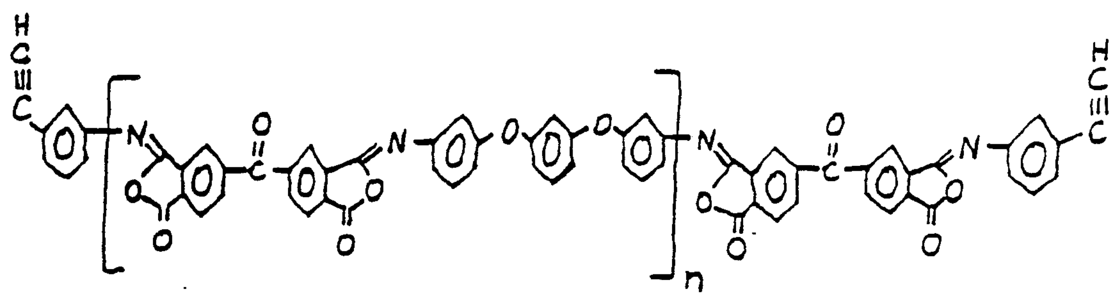

wobei n = 1 bis 300.

5. Zusammensetzung nach Anspruch 4, wobei n = 1 bis 30.

6. Zusammensetzung nach Anspruch 1, wobei die zweite Komponente aus einem monomeren Gemisch von Verbindungen der folgenden Formel gewonnen ist:

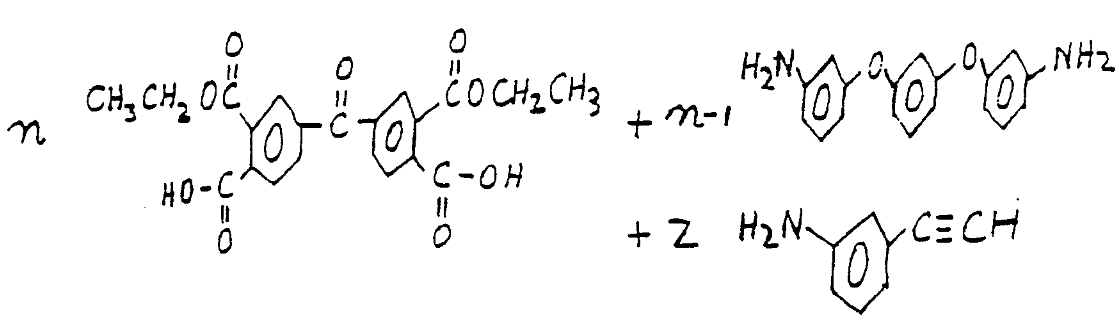

wobei n = 2 bis 300.

7. Zusammensetzung nach Anspruch 1, wobei die zweite Komponente ein Acetylen-terminiertes Polyimid der folgenden Formel ist:

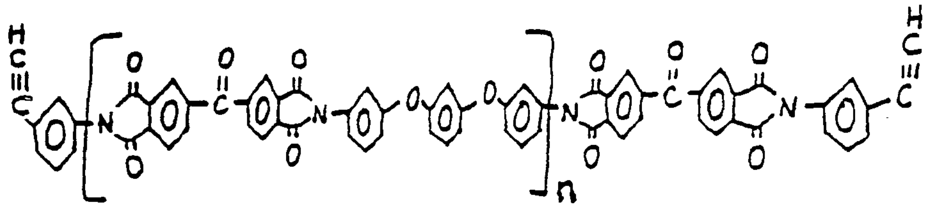

wobei n = 1 bis 300.

8. Zusammensetzung nach Anspruch 1, wobei n = 1 bis 30.

9. Zusammensetzung nach einem der Ansprüche 1 bis 8, wobei die erste Komponente ein Poly(aryletherketon) oder ein Poly(etherimid) ist und die zweite Komponente ein Acetylenterminiertes Polyimid, Polyisoimid oder eine polymere Vorstufe davon ist.

10. Zusammensetzung nach einem der Ansprüche 1 bis 8, wobei die erste Komponente ein Gemisch aus einem Poly(aryletherketon) und einem Poly(etherimid) ist und die zweite Komponente ein Acetylenterminiertes aromatisches Polyimid, Polyisoimid oder eine polymere Vorstufe davon ist.

11. Zusammensetzung nach einem der vorhergehenden Ansprüche, wobei die reaktionsfähige zweite Komponente 5—35 Gew.-% der Zusammensetzung umfaßt.

12. Zusammensetzung nach einem der vorhergehenden Ansprüche, die ferner einen Verstärkerfüllstoff umfaßt.

13. Zusammensetzung nach Anspruch 12, wobei der Verstärkerfüllstoff Kohlenstoffaser, Polyamidfaser oder Glasfaser ist.

14. Zusammensetzung nach einem der vorhergehenden Ansprüche, die im wesentlichen gehärtet ist.

15. Gegenstand, der ein Substrat umfaßt, das auf einer Oberfläche wenigstens eine Schicht aus einer Zusammensetzung nach einem der vorhergehenden Ansprüche aufweist.

16. Gegenstand nach Anspruch 15, wobei das Substrat auf seiner Oberfläche mehrere Schichten aufweist, von denen jede eine Zusammensetzung nach einem der Ansprüche 1 bis 13 umfaßt.

17. Gegenstand nach Anspruch 16, wobei sich zwischen zwei benachbarten Schichten der Zusammensetzung eine Schicht aus leitfähigem Material befindet.

18. Gegenstand nach Anspruch 17, wobei die Schicht aus leitfähigem Material nicht durchgehend ist und mehrere über den Gegenstand verlaufende Leiterbahnen bildet.

19. Gegenstand nach Anspruch 18, der ferner wenigstens ein Halbleiterelement umfaßt.

20. Verbindungsverfahren, umfassend folgende Schritte:

(1) Zusammenpressen einer Zusammensetzung nach einem der Ansprüche 1 bis 13 zwischen zwei Substraten; und

(2) Härten der zusammengepreßten Zusammensetzung bei erhöhter Temperatur.

21. Verfahren zum Herstellen eines Gegenstands, umfassend folgende Schritte:

(a) Aufbringen einer Lösung einer Zusammensetzung nach einem der Ansprüche 1 bis 13 auf eine Oberfläche eines Substrats;

(b) Verdampfen des Lösungsmittels aus der Lösung unter Bildung einer ersten Schicht der Zusammensetzung auf dem Substrat; und

(c) Härten der Zusammensetzung.

22. Verfahren nach Anspruch 21, welches den Schritt des Aufbringens einer Schicht eines leitfähigen Materials auf die erste Schicht umfaßt.

23. Verfahren nach Anspruch 22, wobei die leitfähige Schicht nicht durchgehend ist und mehrere über die erste Schicht verlaufende Leiterbahnen bildet.

24. Verfahren nach einem der Ansprüche 21 bis 23, welches Schritt des Aufbringens über der ersten Schicht und über der Schicht aus einer Zusammensetzung nach einem der Ansprüche 1 bis 13 umfaßt.

**Revendications**

1. Composition réticulable comprenant (a) comme premier constituant, un polymère aromatique qui est un pyrrone, ou un polyimide iso-indoloquinazolinedione, ou bien un polymère aromatique ayant un premier motif répété prépondérant choisi entre

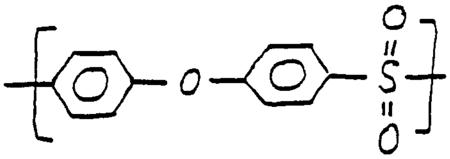 ;

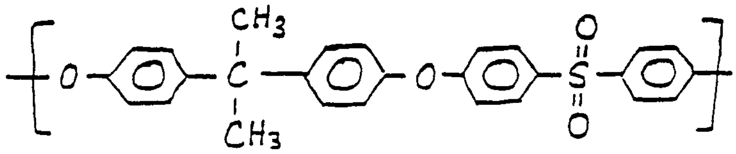 ;

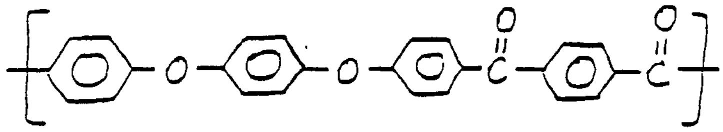 ;

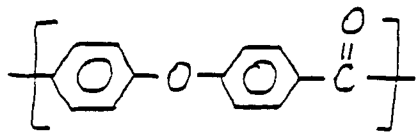 ;

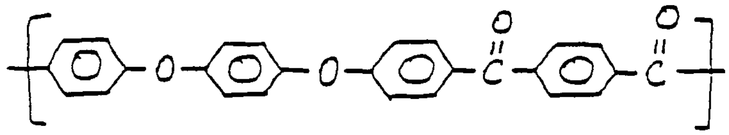 ;

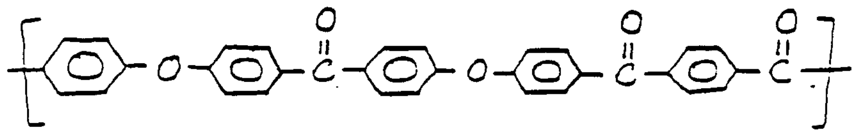 ;

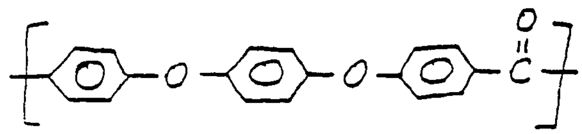 ;

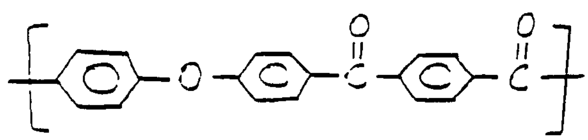 ;

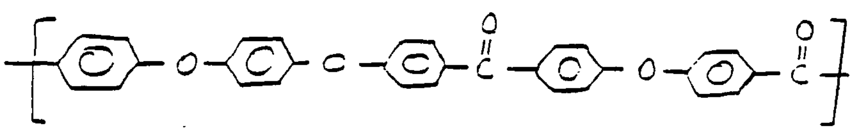 ;

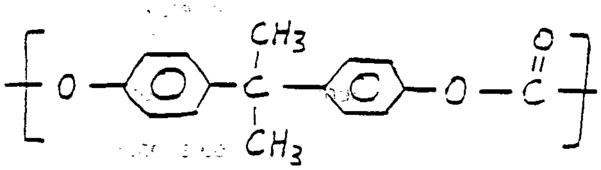 ;

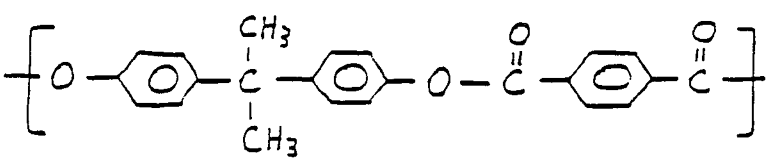 ;

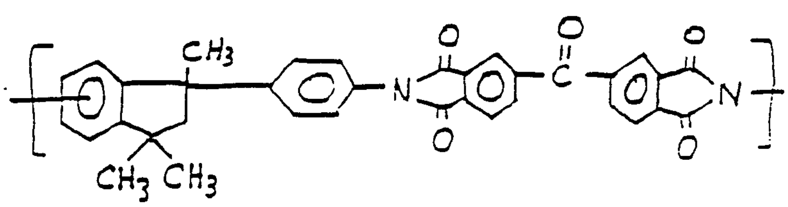 ; et

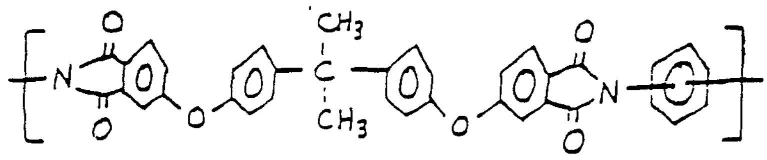 ;

et (b) un second constituant réactif compatible avec le polymère aromatique, second constituant qui est un poly(imide), un poly(iso-imide), ou un de ses précurseurs polymériques, à terminaison acétylène, et qui peut être, en variante, lorsque le polymère aromatique est une poly(aryléthercétone) indiquée par l'un des troisième à onzième (inclus) motifs répétés énumérés ci-dessus, un poly(imide), un poly(iso-imide), ou un de ses précurseurs polymériques, à terminaison maléimide ou vinyle, ledit second constituant comprenant 1 à 300 seconds motifs répétés prépondérants qui sont différents es premiers motifs répétés prépondérants, et étant pratiquement dépourvu de soufre élémentaire et de soufre divalent réactif, ledit second constituant étant présent en une quantité efficace pour provoquer une réticulation notable de la composition.

2. Composition suivant la revendication 1, dans laquelle le second constituant est une matière aromatique à terminaison acétylène répondant à la formule:

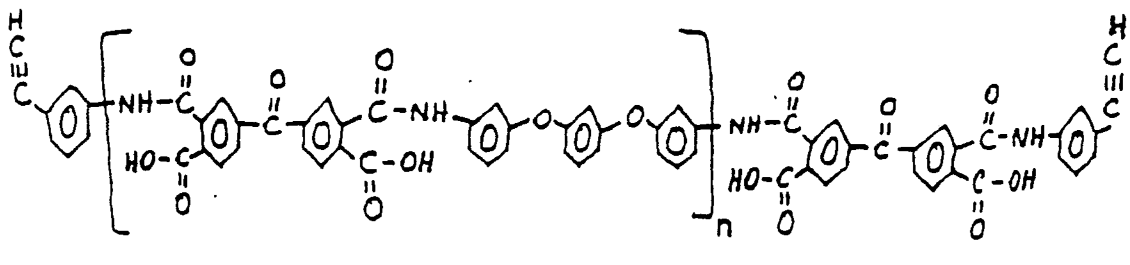

dans laquelle n a une valeur de 1 à 300.

3. Composition suivant la revendication 2, dans laquelle n a une valeur de 1 à 30.

4. Composition suivant la revendication 1, dans laquelle le second constituant est un poly(iso-imide) à terminaison acétylène répondant à la formule:

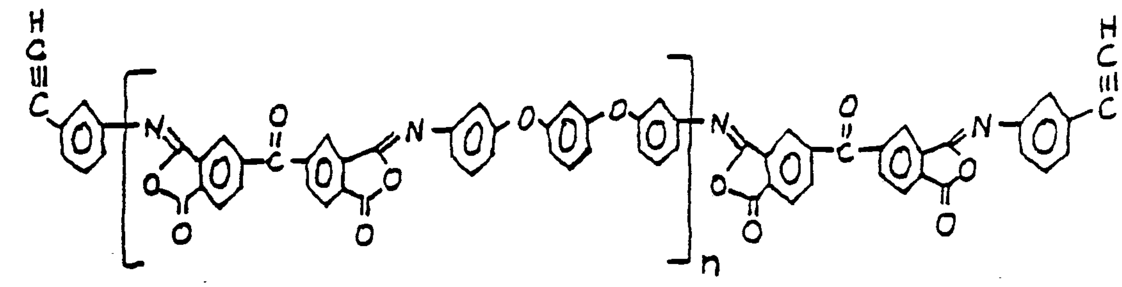

dans laquelle n a une valeur de 1 à 300.

5. Composition suivant la revendication 4, dans laquelle n a une valeur de 1 à 30.

6. Composition suivant la revendication 1, dans laquelle le second constituant est dérivé d'un mélange monomérique de composés de formule:

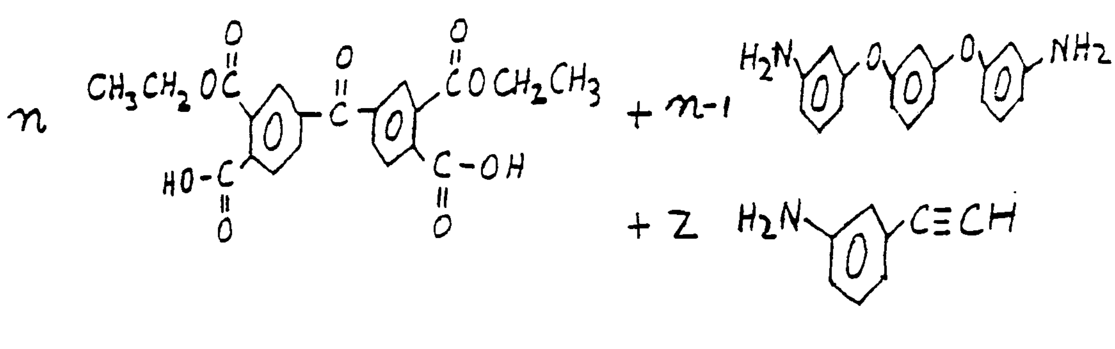

dans laquelle n a une valeur de 2 à 300.

7. Composition suivant la revendication 1, dans laquelle le second constituant est un poly(imide) à terminaison acétylène répondant a la formule:

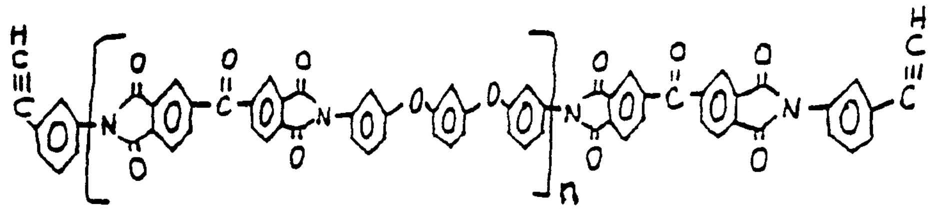

dans laquelle n a une valeur de 1 à 300.

8. Composition suivant la revendication 1, dans laquelle n a une valeur de 1 à 30.

9. Composition suivant l'une quelconque des revendications 1 à 8, dans laquelle le premier constituant est une poly(aryléthercétone) ou un poly(étherimide), et le second constituant est un poly(imide), poly(iso-imide), ou un de ses précurseurs polymériques, à terminaison acétylène.

10. Composition suivant l'une quelconque des revendications 1 à 8, dans laquelle le premier constituant est un mélange d'une poly(aryléthercétone) et d'un poly(étherimide), et le second constituant est un poly(imide), poly(iso-imide), ou un de ses précurseurs polymériques, à terminaison acétylène.

11. Composition suivant l'une quelconque des revendications précédentes, dans laquelle le second constituant réactif représente 5% à 35% en poids de la composition.

12. Composition suivant l'une quelconque des revendications précédentes, qui comprend en outre une charge de renforcement.

13. Composition suivant la revendication 12, dans laquelle la charge de renforcement est une fibre de carbone, une fibre de poly(amide) ou une fibre de verre.

14. Composition suivant l'une quelconque des revendications précédentes, qui est notablement réticulée.

15. Article comprenant un substrat portant sur l'une de ses surfaces au moins une couche d'une composition suivant l'une quelconque des revendications précédentes.

16. Article suivant la revendication 15, dans lequel le substrat porte sur une de ses surfaces plusieurs couches, chacune comprenant une composition suivant l'une quelconque des revendications 1 à 13.

17. Article suivant la revendication 16, dans lequel une couche de matière conductrice est interposée entre deux couches adjacentes de la composition.

18. Article suivant la revendication 17, dans lequel la couche de matière conductrice est non continue et forme plusieurs voies conductrices à travers l'article.

19. Article suivant la revendication 18, qui comprend en outre au moins un élément semi-conducteur.

20. Procédé de liaison, consistant:

(1) à comprimer une composition suivant l'une quelconque des revendications 1 à 13 entre deux substrats; et

(2) à provoquer la réticulation à température élevée de la composition comprimée.

21. Procédé de préparation d'un article, consistant:

(a) à déposer sur une surface d'un substrat une solution d'une composition suivant l'une quelconque des revendications 1 à 13;

(b) à évaporer le solvant de ladite solution pour former une première couche de ladite composition sur le substrat; et

(c) à provoquer la réticulation de ladite composition.

22. Procédé suivant la revendication 21, qui comprend l'étape consistant à appliquer une couche de matière conductrice sur la première couche.

23. Procédé suivant la revendication 22, dans lequel la couche conductrice est non continue et forme plusieurs voies conductrices à travers la première couche.

24. Procédé suivant l'une quelconque des revendications 21 à 23, qui comprend l'étape consistant à déposer sur la première couche une couche d'une composition suivant l'une quelconque des revendications 1 à 13.